# EUROPEAN PATENT APPLICATION

(11) **EP 3 738 433 A1**
(43) Date of publication of application: **18.11.2020**
(21) Application number: 19738178.3
(22) Date of filing: 10.01.2019
(51) Int. Cl.: A01K 61/60, A01K 63/00

(54) **FISH-BREEDING ENCLOSURE**

(30) Priority: 13.01.2018 JP 2018003880
(71) Applicant: Shin Nippon Biomedical Laboratories, Ltd., Kagoshima 891-1394 (JP)
(72) Inventor: NAGATA, Ryoichi, Kagoshima-shi, Kagoshima 891-1394 (JP); KAWAKAMI, Yutaka, Kagoshima-shi, Kagoshima 891-1394 (JP)
(74) Representative: Pitchford, James Edward
(86) International application number: PCT/JP2019/000460
(87) International publication number: WO 2019/139067

(57) **Abstract**

[Problem] To provide a cage that can be easily cleaned. [Solution] A fish-breeding cage including: a frame 3 constituting the sides of a cuboid; a first net 11 covering a right side surface 5, a bottom surface 7, and a left side surface 9 of the frame 3; a first net feeder 19 for feeding the first net 11 and a second net 17 that covers a front surface 13, the bottom surface 7, and a rear surface 15 of the frame 3; and a second net feeder 21 for feeding the second net 17. When the first net 11 or the second net 17 is renewed, the first net 11 or the second net 17 is drawn out from the first net feeder 19 or the second net feeder 21, respectively.

## Description

### TECHNICAL FIELD

The present invention relates to a fish breeding cage.

### BACKGROUND ART

JP-A-2015-84742 discloses a cage on which a soft net fabric is stretched.

JP-A-2016-54679 discloses an aquarium facility in which a capturing cloth can be moved and cleaned. This capturing cloth is spread out on a bottom surface of an aquarium to collect remaining baits and droppings.

Patent Document 1: JP-A-2015-84742
Patent Document 2: JP-A-2016-54679

### DISCLOSURE OF THE INVENTION

### PROBLEMS TO BE SOLVED BY THE INVENTION

Cleaning the remaining baits and the droppings in the conventional cage was hard. Therefore, a cage that allows easily cleaning the remaining baits and the droppings is desired.

### SOLUTIONS TO THE PROBLEMS

The present invention is basically based on knowledge that a peripheral area part constituting a cage is formed of a net and the net can be supplied to ensure easily making the cage that becomes dirty with remaining baits and droppings clean.

The present invention relates to a fish breeding cage. This fish breeding cage is a fish breeding cage that includes a frame 3, a first net 11, and a second net 17. The frame 3 constitutes sides of a rectangular parallelepiped. The first net 11 covers a right side surface 5, a bottom surface 7, and a left side surface 9 of the frame 3. The second net 17 covers a front surface 13, the bottom surface 7, and a back surface 15 of the frame 3.

This fish breeding cage further includes a first net supply unit 19 configured to supply the first net 11 and a second net supply unit 21 configured to supply the second net 17.

When the first net 11 and the second net 17 in use become dirty, the dirty nets are collected and the first net 11 and a second net 17 are supplied from the first net supply unit 19 and the second net supply unit 21, respectively, thus constituting new wall surfaces. This allows collecting the dirty net and keeping the cage clean.

This fish breeding cage is preferably configured as follows. When a length required to cover the right side surface 5, the bottom surface 7, and the left side surface 9 of the frame 3 is defined as L₁ [m], the first net 11 has a length of 2Li [m] or more. The first net 11 has a part housed in a roll shape by the first net supply unit 19. When a length required to cover the front surface 13, the bottom surface 7, and the back surface 15 of the frame 3 is defined as L₂ [m], the second net 17 has a length of 2L₂ [m] or more. The second net 17 has a part housed in a roll shape by the second net supply unit 21.

In this case, pulling the first net 11 and the second net 17 supplies the first net 11 and the second net 17 from the first net supply unit 19 and the second net supply unit 21, respectively. Thus, the net can be easily re-covered.

This fish breeding cage is preferably configured as follows. The frame 3 has four first L-shaped frames 31, 33, 35, 37 extending from the bottom surface 7 in a direction toward a top surface 23. This fish breeding cage preferably further has four outer frames 41, 43, 45, 47 that are capable of covering the four first L-shaped frames 31, 33, 35, 37.

In a state where the four outer frames 41, 43, 45, 47 are brought into close contact with the four first L-shaped frames 31, 33, 35, 37, with the first net 11 and the second net 17 interposed, covering the four first L-shaped frames 31, 33, 35, 37 fixes the first net 11 and the second net 17 to the four first L-shaped frames 31, 33, 35, 37.

Meanwhile, in a state where the four outer frames 41, 43, 45, 47 are released from the four first L-shaped frames 31, 33, 35, 37, the first net 11 and the second net 17 are released from the four first L-shaped frames 31, 33, 35, 37, and then by supplying the first net 11 from the first net supply unit 19, the first net 11 is capable of being renewed, and by supplying the second net 17 from the second net supply unit 21, the second net 17 is capable of being renewed.

This fish breeding cage is preferably used for breeding fry young fishes.

### EFFECTS OF THE INVENTION

The present invention allows providing the cage that can be easily cleaned.

### BRIEF DESCRIPTION OF THE DRAWINGS

Fig. 1 is a conceptual diagram illustrating an example of a cage in which a first net supply unit is provided on a left side surface.
Fig. 2 is a front view of the cage of the present invention.
Fig. 3 is a side view of the cage of the present invention.
Fig. 4 is a top view of the cage of the present invention.
Fig. 5 is a conceptual diagram illustrating an example of the net supply unit.
Fig. 6 is a conceptual diagram illustrating an example of an outer frame in an open state.
Fig. 7 is a conceptual diagram illustrating an example of the outer frame in a closed state.
Fig. 8 is a photograph substituting for a drawing illustrating an appearance of the assembled fish breeding cage.
Fig. 9 is a photograph substituting for a drawing illustrating a corner portion of the assembled fish breeding cage.
Fig. 10 is a photograph substituting for a drawing illustrating a state in which the fish breeding cage is disassembled.
Fig. 11 is a photograph substituting for a drawing illustrating the state in which the fish breeding cage is disassembled.

### DESCRIPTION OF PREFERRED EMBODIMENTS

The following describes configurations to embody the present invention using the drawings. The present invention is not limited to the configurations described below but includes configurations that are appropriately modified within a range obvious by those skilled in the art from the following configurations.

The present invention relates to a fish breeding cage. This cage is mainly installed in a growing environment of fishes, such as a housing container or a housing tank wider than the cage, a breeding facility, a pond, or a sea. Breeding water can be exchanged between the growing environment and the cage, and the fishes inside the cage do not escape or are difficult to escape to the growing environment. Examples of the fish include Anguilliformes fishes (for example, eels and larvae of Anguilliformes). This cage is preferably applied to breeding of juvenile fishes.

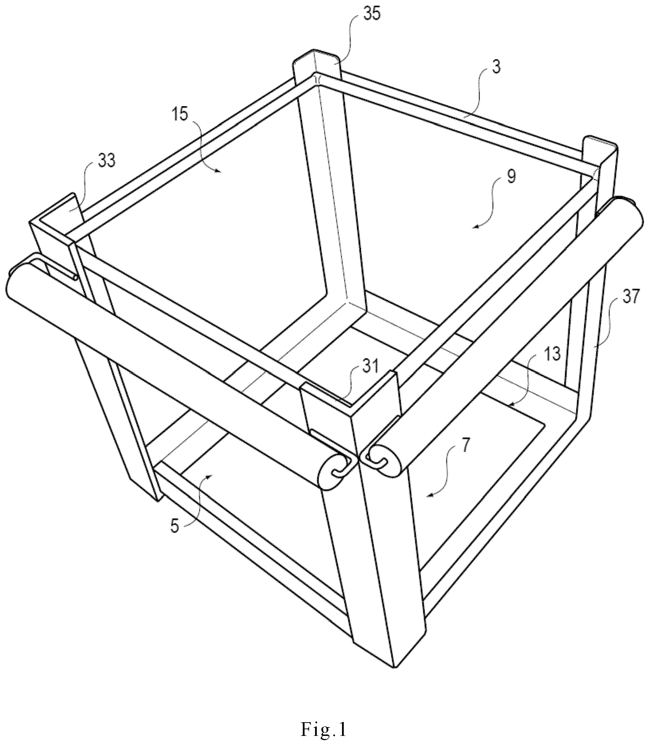

Fig. 1 is a conceptual diagram illustrating an example of the cage in which a first net supply unit is provided on a left side surface. As illustrated in Fig. 1, this fish breeding cage has a frame 3 that constitutes sides of a rectangular parallelepiped. As long as recognized as a box in this field, the rectangular parallelepiped needs not to be strictly the rectangular parallelepiped. A size of the rectangular parallelepiped constituting the frame 3 only needs to be adjusted according to the target fishes. For example, one side has a length of 5 cm or more and 10 m or less, the length may be 10 cm or more and 90 cm or less, may be 15 cm or more and 60 cm or less, and may be 50 cm or more and 2 m or less. The frame may be a frame shaping the sides of the rectangular parallelepiped. The frame may be made of a metal or plastic. In the case of the heavy cage, it is only necessary to give an instruction by any means such that the cage floats in the growing environment. When the cage floats on water, to reduce a situation in which the cage freely moves, the cage may be securely fastened to, for example, an edge of the growing environment and a buoy.

The frame may be controlled such that a metal required to grow the fishes is dissolved. An example of the metal is an iron component. A frame including a coating layer containing a divalent iron ion source, such as ferrous sulfate and ferrous chloride, is a preferred aspect of the present invention. The frame with the coating allows stably supplying the divalent iron ions and allows removing excessive phosphorus ions as a precipitate.

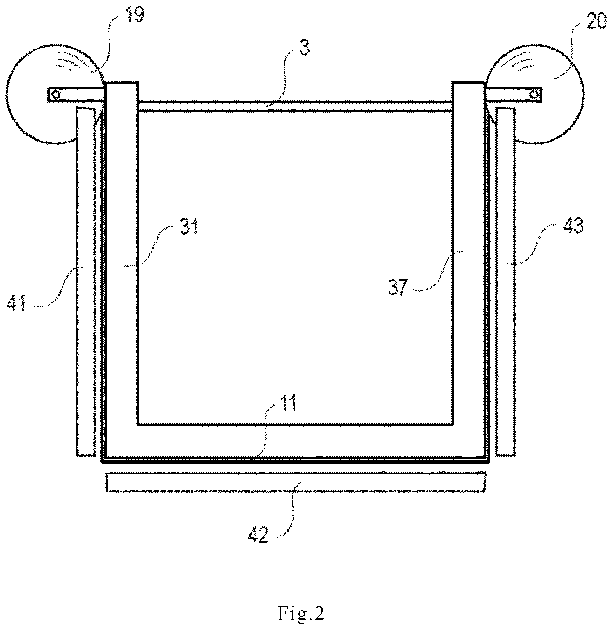

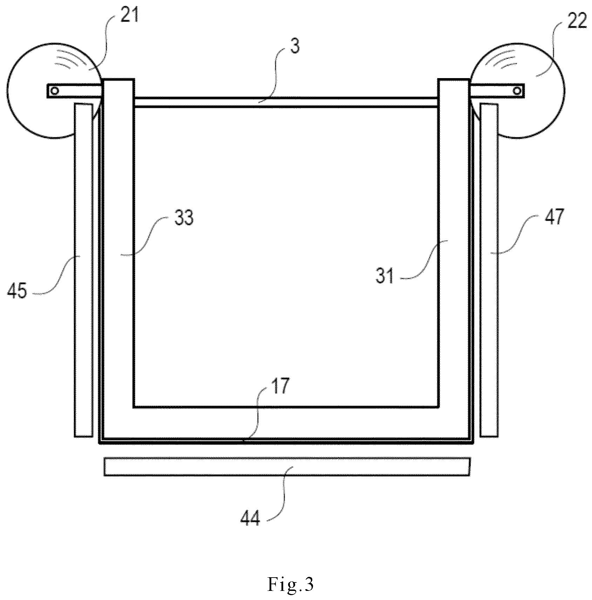

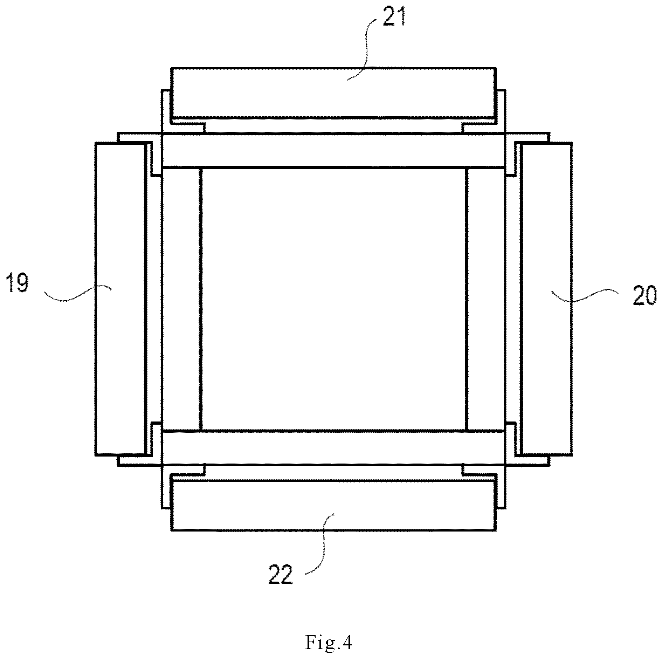

Fig. 2 is a front view of the cage of the present invention. Fig. 3 is a side view of the cage of the present invention. Fig. 4 is a top view of the cage of the present invention. As illustrated in Fig. 2 to Fig. 4, this fish breeding cage includes a first net 11 and a second net 17. The first net 11 is a net that covers a right side surface 5, a bottom surface 7, and a left side surface 9 of the frame 3. The second net 17 is a net that covers a front surface 13, the bottom surface 7, and a back surface 15 of the frame 3. In the example illustrated in Fig. 2 and Fig. 3, a first net collecting unit 20 that collects the first net and a second net collecting unit 22 that collects the second net are disposed.

A material of the net and a size of meshes of the net only need to be appropriately adjusted according to the fishes to be bred. For example, the size of the mesh of the net is 10 µm or more and 5 mm or less, may be 50 µm or more and 1 mm or less, may be 50 µm or more and 200 µm or less, or may be 200 µm or more and 1 mm or less. A material having a required physical property may be applied over the net. The first net 11 and the second net 17 preferably contact the frame 3 with tension (tensile force) to avoid a gap and a warp. This net is preferably sandwiched by L-shaped frames described later so as to contact the frame with tensile force.

This fish breeding cage further includes a first net supply unit 19 configured to supply the first net 11 and a second net supply unit 21 configured to supply the second net 17. When the first net 11 and the second net 17 in use become dirty, the dirty nets are collected and the first net 11 and the second net 17 are suppled from the first net supply unit 19 and the second net supply unit 21, respectively, thus constituting new wall surfaces. This allows collecting the dirty net and keeping the cage clean.

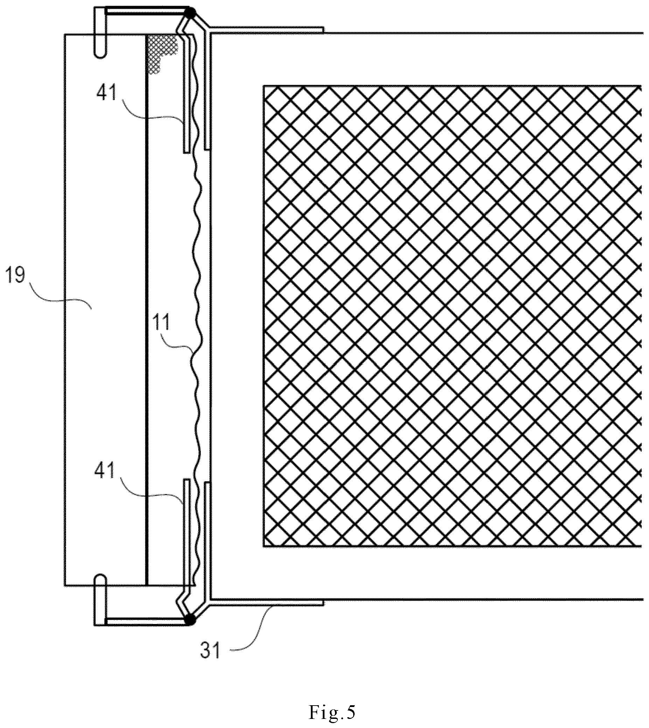

Fig. 5 is a conceptual diagram illustrating an example of the net supply unit. This fish breeding cage is preferably configured as follows. When a length required to cover the right side surface 5, the bottom surface 7, and the left side surface 9 of the frame 3 is defined as L₁ [m], the first net 11 has a length of 2Li [m] or more. The first net 11 has a part housed in a roll shape by the first net supply unit 19. That is, the rest of the part covering the cage is housed in the net supply unit. When the net is replaced (renewed), a new net supplied from the net supply unit to cover the cage. From such an aspect, the first net 11 may have a length of 2L₁ [m] or more and 100L₁ [m] or less, may have a length of 2.1L₁ [m] or more and 20L₁ [m] or less, or may have a length of 2.1L₁ [m] or more and 10L₁ [m] or less. Pulling an end of the first net 11 not housed in the first net supply unit 19 supplies the new part of the first net 11 from the first net supply unit 19. Then, in the presence of the L-shaped frames, the L-shaped frames are preferably released such that a first net 11 can move along the side surface and the bottom surface of the frame. When a length required to cover the front surface 13, the bottom surface 7, and the back surface 15 of the frame 3 is defined as L₂ [m], the second net 17 has a length of 2L₂ [m] or more. The second net 17 has a part housed in a roll shape by the second net supply unit 21. The second net is similar to the first net. A cutting line may be provided at every appropriate length in the net such that the already used part can be cut off along the cutting line when the net is removed. Additionally, instead of the cutting line, a separation part (for example, a zipper) may be disposed at every appropriate length such that the already used part can be cut off. Additionally, edges to cut off the already-used nets may be disposed in the net collecting units 20, 22. With such an edge, the edge can cut the already-used net.

In this case, pulling the first net 11 and the second net 17 supplies the first net 11 and the second net 17 from the first net supply unit 19 and the second net supply unit 21, respectively. Thus, the net can be easily re-covered.

This fish breeding cage is preferably configured as follows. The frame 3 has four first L-shaped frames 31, 33, 35, 37 extending from the bottom surface 7 in a direction of a top surface 23. As illustrated in Fig. 1, upper portions of the L-shaped frames may extend from upper horizontal frame parts of the frame 3. The L-shaped frames may extend from the bottom surface in the direction of the top surface such that the four sides perpendicularly extending from the bottom surface constituting the rectangular parallelepiped are sandwiched by the corner portions. A length (width) of one side of the L-shaped frame only needs to be adjusted appropriately according to the size of the frame. An example of the length (width) of one side of the L-shaped frame is 1 cm or more and 1 m or less, may be 1 cm or more and 10 cm or less, may be 2 cm or more and 10 cm or less, and may be 5 cm or more and 15 cm or less. Outer frames 42 and 44 are preferably disposed on the L-shaped frames of the bottom surface such that the nets are laid between the bottom surface and the outer frames.

This fish breeding cage preferably further has four outer frames 41, 43, 45, 47 that can cover the four first L-shaped frames 31,33, 35, 37. The first outer frame 41, for example, is openably/closably mounted via one positioned on the bottom surface of the right side surface 5 in the frame 3 and a hinge. Therefore, the first outer frame 41 can cover and release the parts of the two L-shaped frames positioned on the right side surface 5. Note that it is only necessary that the first sheet passes through between the one positioned on the bottom surface of the right side surface 5 in the frame 3 and the hinge. This allows the first sheet to move while the outer frame is released. Such a mechanism is similar to the second to fourth outer frames 43, 45, 47.

Then, in a state where the four outer frames 41, 43, 45, 47 are brought into close contact with the four first L-shaped frames 31, 33, 35, 37 (a state where the outer frames and the L-shaped frames are closed), with the first net 11 and the second net 17 interposed, covering the four first L-shaped frames 31, 33, 35, 37 fixes the first net 11 and the second net 17 to the four first L-shaped frames 31, 33, 35, 37.

Meanwhile, in a state where the four outer frames 41, 43, 45, 47 are released from the four first L-shaped frames 31, 33, 35, 37 (a state where the outer frames and the L-shaped frames are open), the first net 11 and the second net 17 are released from the four first L-shaped frames 31, 33, 35, 37, and then by supplying the first net 11 from the first net supply unit 19, the first net 11 is allowed to be renewed or by supplying the second net 17 from the second net supply unit 21, the second net 17 is allowed to be renewed.

Next, an example of using the fish breeding cage of the present invention will be described. This example is the fish breeding cage that includes the two net supply units 19 and 21 and also has the four L-shaped frames 31, 33, 35, 37 and the four outer frames 41, 43, 45, 47.

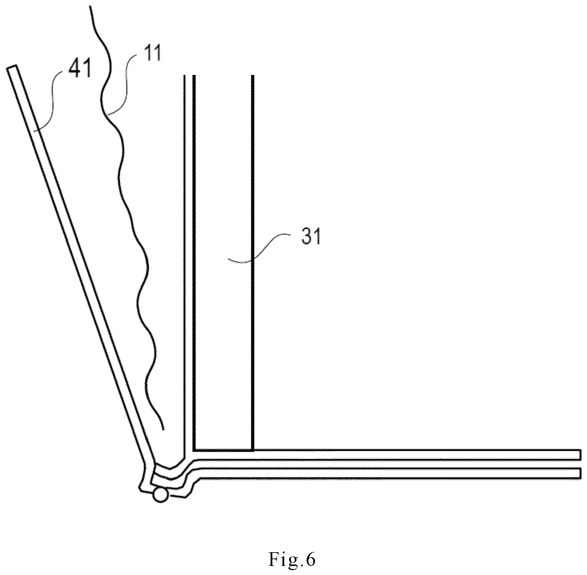

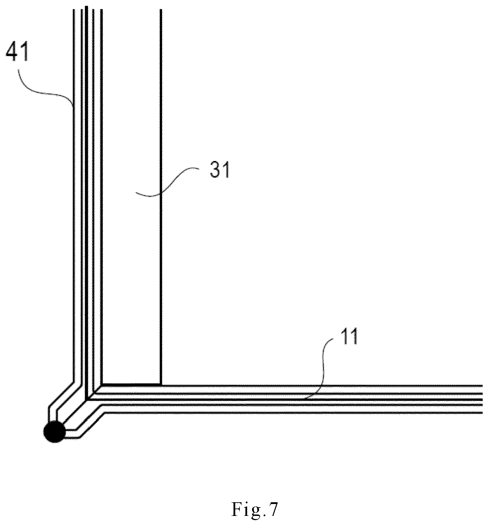

First, the four outer frames 41, 43, 45, 47 are set to the open state, and the outer frames 41, 43, 45, 47 are released from the left and right side surfaces 5, 9, the front surface 13, and the back surface 15 of the frame. Fig. 6 is a conceptual diagram illustrating an example of the outer frame 41 in the open state. The first net 11 is pulled out from the first net supply unit 19 in the state. For example, when the first net supply unit 19 is mounted to the right side surface 5 side, the first net 11 covers the right side surface 5, the bottom surface 7, and the left side surface 9. The first net supply unit 19 may be mounted to the left side surface 9 side. Next, the first outer frame 41 is set to the closed state on the right side surface 5 (closely contacts the right side surface 5 of the frame with the first net interposed). Fig. 7 is a conceptual diagram illustrating an example of the outer frame 41 in the closed state. After that, with the first net spread, the second outer frame 43 is set to the closed state on the left side surface 9. Thus, the first net 11 covers the right side surface 5, the bottom surface 7, and the left side surface 9. The same applies to a second net. Thus, the fish breeding cage is completed.

The completed fish breeding cage is installed in a breeding environment system (for example, a large-sized aquarium and a sea). The fishes to be bred are put into the fish breeding cage for breeding. After breeding, after an elapse of a predetermined period or when the fish breeding cage becomes dirty, for example, the first and second outer frames are set to the open state while the fish breeding cage is put into the breeding environment system, and after the first sheet is renewed, the first and second outer frame are set to the closed state. The same applies to the second net. Thus, the net of the cage is replaced on the spot.

### Examples

### Fish Breeding Cage

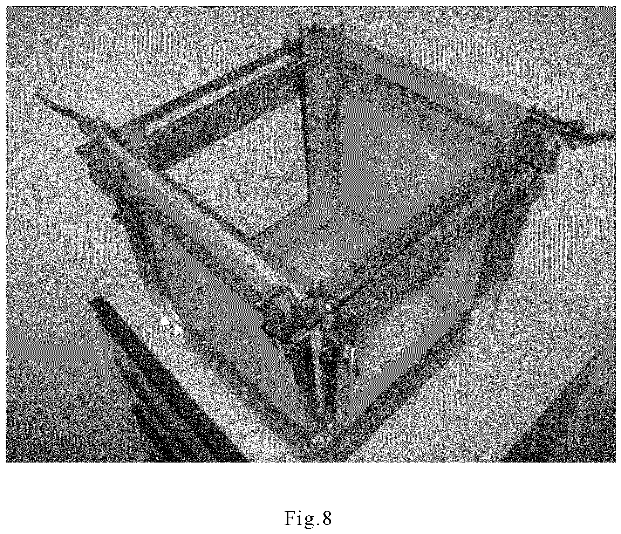

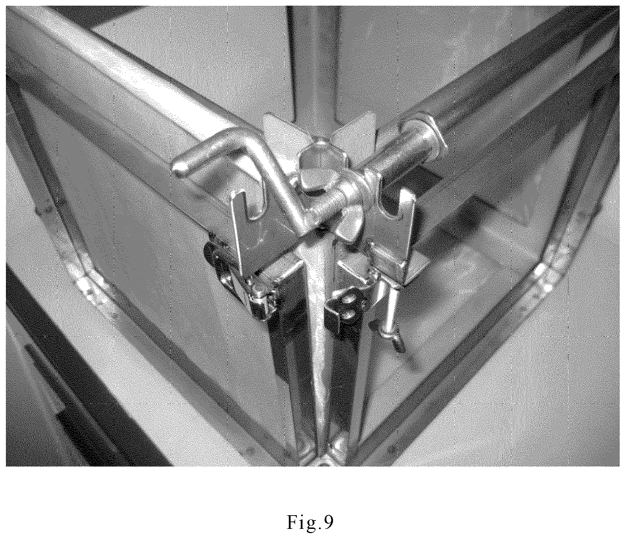

Fig. 8 is a photograph substituting for a drawing illustrating an appearance of the assembled fish breeding cage. As shown in Fig. 8, this cage causes a roll to rotate to ensure pulling out the net of the side surface for renewal. Fig. 9 is a photograph substituting for a drawing illustrating a corner portion of the assembled fish breeding cage. As shown in Fig. 9, a handle protruding from the roll is provided on this roll. The roll is rotated by rotating the handle, and the net is pulled out to ensure renewing the net. Further, a binder is provided outside the frame to function as a frame to bring the net into close contact with the outer frame. As shown in Fig. 9, this binder can be opened and closed using a lower part of the outer frame as a shaft. This allows releasing the net and fixing the net to the outer frame.

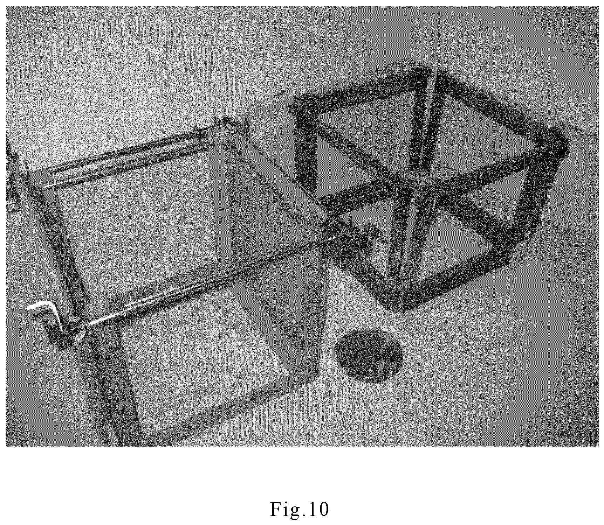

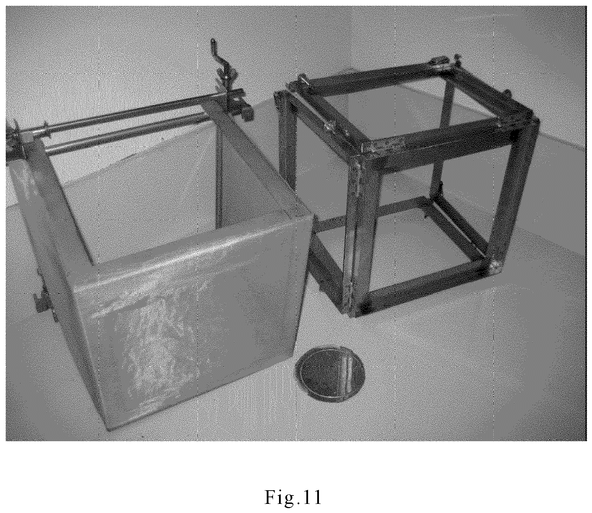

Fig. 10 and Fig. 11 are photographs substituting for a drawing illustrating a state in which the fish breeding cage is disassembled. As illustrated in Fig. 10 and Fig. 11, in this example, a framework and the binder are removable. The binder is positioned outside the framework. The net sandwiched by the binders can be fixed to the framework. By releasing frames constituting the binders from the framework, the net can be released, and the net can be moved using a roller. To fix the net using the fish breeding cage, the framework is put in the binders. The binders coupled to the bottom surface are present on the four side surfaces, and binding portions to press the top, right and left, and lower sides are coupled at each surface. Fitting the framework to the bottom surface allows crimping the mutual nets.

### INDUSTRIAL APPLICABILITY

The present invention relates to a cage and is usable in the aquaculture industry and the aquarium fish industry.

### DESCRIPTION OF REFERENCE SIGNS

- 3: Frame
- 5: Right side surface
- 7: Bottom surface
- 9: Left side surface
- 11: First net
- 13: Front surface
- 15: Back surface
- 17: Second net
- 19: First net supply unit
- 21: Second net supply unit

## Claims

1. A fish breeding cage comprising:
a frame (3) that constitutes sides of a rectangular parallelepiped;
a first net (11) that covers a right side surface (5), a bottom surface (7), and a left side surface (9) of the frame (3); and
a second net (17) that covers a front surface (13), the bottom surface (7), and a back surface (15) of the frame (3), wherein
the fish breeding cage further comprises:
a first net supply unit (19) configured to supply the first net (11); and
a second net supply unit (21) configured to supply the second net (17).

2. The fish breeding cage according to claim 1, wherein
when a length required to cover the right side surface (5), the bottom surface (7), and the left side surface (9) is defined as L₁ [m], the first net (11) has a length of 2L₁ [m] or more, and the first net (11) has a part housed in a roll shape by the first net supply unit (19), and
when a length required to cover the front surface (13), the bottom surface (7), and the back surface (15) is defined as L₂ [m], the second net (17) has a length of 2L₂ [m] or more, and the second net (17) has a part housed in a roll shape by the second net supply unit (21).

3. The fish breeding cage according to claim 1, wherein
the frame (3) has four first L-shaped frames (31, 33, 35, 37) extending from the bottom surface (7) in a direction toward a top surface (23),
the fish breeding cage further includes four outer frames (41, 43, 45, 47) that are capable of covering the four first L-shaped frames (31, 33, 35, 37),
in a state where the four outer frames (41, 43, 45, 47) are brought into close contact with the four first L-shaped frames (31, 33, 35, 37), with the first net (11) and the second net (17) interposed, covering the four first L-shaped frames (31, 33, 35, 37) fixes the first net (11) and the second net (17) to the four first L-shaped frames (31, 33, 35, 37), and
in a state where the four outer frames (41, 43, 45, 47) are released from the four first L-shaped frames (31, 33, 35, 37), the first net (11) and the second net (17) are released from the four first L-shaped frames (31, 33, 35, 37), and then by supplying the first net (11) from the first net supply unit (19), the first net (11) is capable of being renewed, and by supplying the second net (17) from the second net supply unit (21), the second net (17) is capable of being renewed.

4. The fish breeding cage according to claim 1 for breeding fry young fishes.
